# EUROPÄISCHE PATENTANMELDUNG

(11) **EP 1 319 695 A1**
(43) Veröffentlichungstag der Anmeldung: **18.06.2003**
(21) Anmeldenummer: 02027260.5
(22) Anmeldetag: 06.12.2002
(51) Int. Cl.: C09D 9/00, C09D 9/04

(54) **Wässriges alkalisches Entlackungsmittel**

(30) Priorität: 15.12.2001 DE 10161844
(71) Anmelder: Henkel Kommanditgesellschaft auf Aktien, 40589 Düsseldorf (DE)
(72) Erfinder: Rehm, Hans-Jörgen, 40724 Hilden (DE); Spei, Brigitte, 40589 Düsseldorf (DE)

(57) **Zusammenfassung**

Verwendung von Ethoxylierungs- und/oder Propoxylierungsprodukten eines Alkohols, der einen aromatischen ringförmigen Substituenten trägt, mit 2 bis 15 Mol Ethylenoxid und/oder Propylenoxid, als Additiv in wässrigen alkalischen Entlackungsmitteln; wässriges alkalisches Entlackungsmittel, das Wasser, einen oder mehrere organische Alkohole sowie Alkalitätsträger enthält, dadurch gekennzeichnet, daß es zusätzlich mindestens ein Ethoxylierungs- und/oder Propoxylierungsprodukt eines Alkohols, der einen aromatischen ringförmigen Substituenten trägt, mit 2 bis 15 Mol Ethylenoxid und/oder Propylenoxid enthält.

## Beschreibung

Die Erfindung betrifft ein Mittel und ein Verfahren zum Entlacken von Metalloberflächen, insbesondere von Metalloberflächen aus Stahl. Eine besonders gute Entlackungswirkung wird dadurch erreicht, daß das Entlackungsmittel als zusätzliche Komponente Alkoxylierungsprodukte eines Alkohols mit aromatischen ringförmigen Substituenten enthält.

In Produktionsprozessen, bei denen metallische Bauteile lackiert werden, müssen fehllackierte Teile sowie die beim Lackiervorgang eingesetzten mechanischen Hilfsmittel wie beispielsweise Gehänge regelmäßig entlackt werden. Hierfür stehen beispielsweise wäßrige alkalische Entlackungsmittel zur Verfügung. Diese enthalten üblicherweise neben Wasser Ätzalkali und als Wirkstoffe verschiedene Glykole, Benzylalkohol, Furfurylalkohol und/oder Phenoxyethanol. Daneben können sie Additive wie Lösungsvemittler, Verdickungsmittel, Netzmittel und Korrosionsinhibitoren enthalten.

Am Markt besteht ein beständiges Bedürfnis nach Produkten, die auch für neue, weitgehend Chemikalien-resistente Lacksysteme anwendbar sind, die kürzere Entlackungszeiten ermöglichen und die heutigen Umweltstandards entsprechen. Hierzu gehört auch das Bestreben, die erforderliche Wirkstoffkonzentration abzusenken. Die vorliegende Erfindung stellt sich die Aufgabe, bisher verfügbare Produkte auf wäßriger Basis in der genannten Hinsicht zu verbessern.

Die Erfindung basiert auf der Erkenntnis, daß bestimmte Alkoxylierungsprodukte von Alkoholen mit aromatischen ringförmigen Substituenten die Entlackungswirkung herkömmlicher Entlackungsmittel deutlich verbessern.

In einem ersten Aspekt betrifft die Erfindung ein wässriges alkalisches Entlackungsmittel, das Wasser, einen oder mehrere organische Alkohole sowie Alkalitätsträger enthält, dadurch gekennzeichnet, daß es zusätzlich mindestens ein Ethoxylierungs- und/oder Propoxylierungsprodukt eines Alkohols, der einen aromatischen ringförmigen Substituenten trägt, mit 2 bis 15 Mol Ethylenoxid und/oder Propylenoxid enthält.

Als Alkalitätsträger kommen im Rahmen der vorliegenden Erfindung vorzugsweise Ätzalkalien wie beispielsweise Natrium- oder Kaliumhydroxid in Betracht. Aus Gründen der Löslichkeit wird vorzugsweise Kaliumhydroxid verwendet.

Ein spezielleres Entlackungsmittel im Rahmen der vorliegenden Erfindung ist dadurch charakterisiert, daß es
a) 40 bis 80 Gew.-% Wasser,
b) 10 bis 40 Gew.-% organischer Alkohol,
c) 5 bis 25 Gew.-% Alkalitätsträger,
d) 1 bis 25 Gew.-% Ethoxylierungs- und/oder Propoxylierungsprodukt eines Alkohols, der einen aromatischen ringförmigen Substituenten trägt, mit 2 bis 15 Mol Ethylenoxid und/oder Propylenoxid und erwünschtenfalls
e) weitere Wirk- oder Hilfsstoffe enthält, wobei sich die Mengenanteile zu 100 Gew.-% addieren.

Die organischen Alkohole b) können allgemein ausgewählt sein aus Glykolen oder Polyglykolen, die einseitig verethert sein können, beispielsweise mit Alkoholen mit 1 bis 5 C-Atomen. Insbesondere sind Di- oder Triethylenglykol oder deren Monoether geeignet. Zusammen mit diesen oder anstelle von diesen können Alkohole verwendet werden, die einen gesättigten, ungesättigten oder aromatischen homo- oder heterocyclischen ringförmigen Substituenten aufweisen. Vorzugsweise setzt man eine Mischung von Glykolverbindungen und den letztgenannten Alkoholen mit ringförmigen Substituenten ein. Ein bevorzugtes Entlackungsmittel im Rahmen der vorliegenden Erfindung ist dadurch gekennzeichent, daß als organischer Alkohol b) eine Mischung von b1) Di- oder Triethylenglykol mit b2) einem oder mehreren Alkoholen, die einen gesättigten, ungesättigten oder aromatischen homo- oder heterocyklischen ringförmigen Substituenten aufweisen, im Gewichtsverhältnis b1) zu b2) = 1 : 0,1 bis 1 : 1 vorliegt. Als Alkohole der Gruppe b2) kommen insbesondere Benzylalkohol, Furfurylalkohol und Phenoxyethanol in Betracht.

Als Ethoxylierungs- und/oder Propoxylierungsprodukt eines Alkohols, der einen aromatischen ringförmigen Substituenten trägt, mit 2 bis 15 Mol Ethylenoxid und/oder Propylenoxid wählt man vorzugsweise solche aus der Gruppe der Ethoxylierungsprodukte einwertiger Alkohole aus, die einen aromatischen Sechsring-Substituenten tragen. Besonders bevorzugt sind Ethoxylierungsprodukte von Benzylalkohol und Phenoxyethanol. Vorzugsweise weist das Ethoxylierungsprodukt 2 bis 10 Ethylenoxidund/oder Propylenoxideinheiten auf, insbesondere 2,5 bis 8 Ethylenoxid- und/oder Propylenoxideinheiten. Die genannten Alkoxylierungsgrade beziehen sich jeweils auf die Summe der Ethylenoxid- und/oder Propylenoxideinheiten. Dabei sind reine Ethoxylierungsprodukte bevorzugt. Beispiele hierfür sind ein Ethoxylierungsprodukt von Phenoxyethanol mit im Mittel 4 Mol Ethylenoxid oder ein Ethoxylierungsprodukt von Benzylalkohol mit im Mittel 5 Mol Ethylenoxid.

Häufig ist es für die Praxis ausreichend, daß das Entlackungsmittel im wesentlichen aus den aufgezählten Komponenten besteht. Demnach betrifft die Erfindung in einem speziellen Aspekt ein Entlackungsmittel, das aus
a) 40 bis 80 Gew.-% Wasser,
b) 10 bis 40 Gew.-% organischer Alkohol,
c) 5 bis 25 Gew.-% Alkalitätsträger,
d) 1 bis 25 Gew.-% Ethoxylierungs- und/oder Propoxylierungsprodukt eines Alkohols, der einen aromatischen ringförmigen Substituenten trägt, mit 2 bis 15 Mol Ethylenoxid und/oder Propylenoxid und
e) 1 bis 15 Gew.% weitere Wirk- oder Hilffstoffe besteht,
wobei sich die Mengenanteile zu 100 Gew.-% addieren.

Allgemein kommen im Rahmen der vorliegenden Erfindung als weitere Wirk- oder Hilfsstoffe e) Lösungsvermittler, Verdickungsmittel, Netzmittel und Korrosionsinhibitoren in Betracht. Beispiele hierfür sind Carbonsäuren mit 6 bis 11 C-Atomen, die man vorzugsweise mit Alkanolaminen, beispielsweise mit Monoethanolamin neutralisiert. Ein bevorzugtes Beispiel einer solchen Carbonsäure ist Isononansäure. Diese Carbonsäuren zusammen mit den Alkanolaminen können als Lösungsvermittler wirken. Sie wirken gleichzeitig korrosionsinhibierend auf Stahloberflächen.

Die vorstehend beschriebenen Mittel stellen Konzentrate dar, die zur Verwendung mit Wasser im Verhältnis Konzentrat: Wasser = 1 : 9 bis 1 : 1, vorzugsweise 1 : 4 bis 1 : 2 verdünnt werden. Die entsprechend verdünnten Anwendungslösungen bilden ebenfalls einen Gegenstand der vorliegenden Erfindung.

In einem zweiten Aspekt betrifft die Erfindung ein Verfahren zum Entlacken von Bauteilen aus Metall, insbesondere aus Stahl, bei dem man die Bauteile für eine Zeitdauer, die für eine vollständige Entlackung ausreicht, mit einem vorstehend beschriebenen mit Wasser verdünnten Entlackungsmittel als Entlackungslösung (Anwendungslösung) in Kontakt bringt. Die Kontaktzeiten liegen vorzugsweise im Bereich von 10 bis 600 Minuten, insbesondere im Bereich von 20 bis 400 Minuten. Die Entlackungslösung weist vorzugsweise eine Temperatur im Bereich von 20 bis 100 °C, insbesondere im Bereich von 40 bis 95 °C auf. Je nach Temperatur und Wirkstoffkonzentration sind Entlackungszeiten von einer Stunde und darunter möglich.

Durch den erfindungsgemäßen Zusatz der Alkoxylierungsprodukte von Alkoholen mit aromatischen ringförmigen Substituenten verkürzt sich die Entlackungszeit im Vergleich zu Entlackungsmitteln, die diesen Zusatz nicht enthalten. Dies verkürzt die Produktionszyklen. Umgekehrt ist es denkbar, die bisherigen Entlackungszeiten beizubehalten, die Wirkstoffkonzentrationen jedoch abzusenken. Insbesondere kann die Konzentration von Alkoholen, die einen gesättigten, ungesättigten oder aromatischen homo- oder heterocyclischen ringförmigen Substituenten aufweisen, abgesenkt werden. Dies bringt eine Kostenersparnis mit sich und erleichtert zusätzlich die Abwasserbehandlung.

Basis der vorliegenden Erfindung ist also die Beobachtung, daß ein Zusatz der genannten Alkoxylierungsprodukte von Alkoholen mit aromatischen ringförmigen Substituenten die Entlackungswirkung deutlich verbessert. Daher betrifft die Erfindung in ihrem allgemeinsten Aspekt die Verwendung von Ethoxylierungs- und/oder Propoxylierungsprodukten eines Alkohols, der einen aromatischen ringförmigen Substituenten trägt, mit 2 bis 15 Mol Ethylenoxid und/oder Propylenoxid, als Additiv in wäßrigen alkalischen Entlackungsmitteln. Für besonders bevorzugte Ethoxylierungsund/oder Propoxylierungsprodukte gelten die vorstehend unter den anderen Aspekten der Erfindung angeführten Erläuterungen. Für alle Aspekte der vorliegenden Erfindung gilt dabei, daß man diese Ethoxylierungs- und/oder Propoxylierungsprodukte vorzugsweise in Konzentrationen im Bereich von 1 bis 10, insbesondere im Bereich von 3 bis 7 Gew.-% einsetzt.

### Ausführungsbeispiele

Zum Testen der Entlackungswirkung wurden lackierte Musterteile aus Stahl eingesetzt, die mit einem Pulverlack auf Polyesterbasis mit einer Schichtdicke von 90 bis 100 µm beschichtet waren. Die Teile wurden ohne Bewegung in das Entlackungsmittel eingetaucht, das eine Temperatur von 90 °C aufwies.

Für die Versuche wurden folgende Vergleichsmischungen V1, V2 und V3 sowie erfindungsgemäße Mischungen B1 und B2 verwendet. Die Zusammensetzung ist nachstehend in Gew.-% angegeben. Dabei wurde KOH als 50 %ige wäßrige Lösung eingesetzt. Die Tabellen enthalten den Feststoffanteil an KOH, während der Wasseranteil dem Wassergehalt zugerechnet wurde. Die Mischungen stellen Konzentrate dar, die zum Einsatz mit Wasser im Verhältnis Konzentrat : Wasser = 1 : 9 bis 1 : 1, vorzugsweise 1 : 4 bis 1 : 2 verdünnt werden.

**V1 (Vergleich)**

| | |
|---|---|
| Vollentsalztes Wasser | 55 |
| Triethylenglykol | 20 |
| Phenoxyethanol | 5 |
| KOH | 15 |
| n- Octanol x 4 mol Ethylenoxid | 5 |

**V2 (Vergleich)**

| | |
|---|---|
| Vollentsalztes Wasser | 52 |
| Triethylenglykol | 20 |
| Phenoxyethanol | 5 |
| KOH | 15 |
| Isononansäure | 2 |
| Monoethanolamin | 1 |
| Furfurylalkohol x 5 mol Ethylenoxid | 5 |

**V3 (Vergleich)**

| | |
|---|---|
| Vollentsalztes Wasser | 46 |
| Triethylenglykol | 20 |
| Phenoxyethanol | 5 |
| KOH | 15 |
| Isononansäure | 6 |
| Monoethanolamin | 3 |
| Phenoxyethanol x 29 mol Ethylenoxid | 5 |

**B1 (erfindungsgemäß)**

| | |
|---|---|
| Vollentsalztes Wasser | 52 |
| Triethylenglykol | 20 |
| Phenoxyethanol | 5 |
| KOH | 15 |
| Isononansäure | 2 |
| Monoethanolamin | 1 |
| Phenoxyethanol x 4 mol Ethylenoxid | 5 |

**B2 (erfindungsgemäß)**

| | |
|---|---|
| Vollentsalztes Wasser | 52 |
| Triethylenglykol | 20 |
| Phenoxyethanol | 5 |
| KOH | 15 |
| Isononansäure | 2 |
| Monoethanolamin | 1 |
| Benzylalkohol x 5 mol Ethylenoxid | 5 |

**Tabelle**

| Testergebnisse. Entlackungwirkung in % der lackierten Fläche als Funktion der Entlackungszeit. Die Entlacker wurden mit Wasser im Verhältnis 1 : 3 verdünnt. Es wurden jeweils 4 Materialproben entlackt. Die Tabelle gibt die Streubreite der erhaltenen Ergebnisse wieder. | | | | |
|---|---|---|---|---|
| Entlacker | Entlackungswirkung nach | | | |
| | 10 Minuten | 20 Minuten | 30 Minuten | 40 Minuten |
| V1 | 0 | 10 | 10-50 | 95 |
| V2 | 0 | 0 | 0 | 0 |
| V3 | 0 | 0 | 0 | 0 |
| B1 | 5-10 | 50-90 | 95-98 | |
| B2 | 5-10 | 50-90 | 95-98 | |

## Patentansprüche

1. Wässriges alkalisches Entlackungsmittel, das Wasser, einen oder mehrere organische Alkohole sowie Alkalitätsträger enthält, **dadurch gekennzeichnet, daß** es zusätzlich mindestens ein Ethoxylierungs- und/oder Propoxylierungsprodukt eines Alkohols, der einen aromatischen ringförmigen Substituenten trägt, mit 2 bis 15 Mol Ethylenoxid und/oder Propylenoxid enthält.

2. Entlackungsmittel nach Anspruch 1, **dadurch gekennzeichnet, daß** es
a) 40 bis 80 Gew.-% Wasser,
b) 10 bis 40 Gew.-% organischer Alkohol,
c) 5 bis 25 Gew.-% Alkalitätsträger,
d) 1 bis 25 Gew.-% Ethoxylierungs- und/oder Propoxylierungsprodukt eines Alkohols, der einen aromatischen ringförmigen Substituenten trägt, mit 2 bis 15 Mol Ethylenoxid und/oder Propylenoxid und erwünschtenfalls
e) weitere Wirk- oder Hilfsstoffe enthält, wobei sich die Mengenanteile zu 100 Gew.-% addieren.

3. Entlackungsmittel nach Anspruch 2, **dadurch gekennzeichnet, daß** als organischer Alkohol b) eine Mischung von b1) Di- oder Triethylenglykol mit b2) einem oder mehreren Alkoholen, die einen gesättigten, ungesättigten oder aromatischen homooder heterocyklischen ringförmigen Substituenten aufweisen, im Gewichtsverhältnis b1) zu b2) = 1 : 0,1 bis 1 : 1 vorliegt.

4. Entlackungsmittel nach einem oder mehreren der Ansprüche 1 bis 3, **dadurch gekennzeichnet, daß** das Ethoxylierungs- und/oder Propoxylierungsprodukt eines Alkohols, der einen aromatischen ringförmigen Substituenten trägt, mit 2 bis 15 Mol Ethylenoxid und/oder Propylenoxid ausgewählt ist aus Ethoxylierungsprodukten einwertiger Alkohole, die einen aromatischen Sechsring-Substituenten tragen.

5. Entlackungsmittel nach einem oder mehreren der Ansprüche 1 bis 4, **dadurch gekennzeichnet, daß** das Ethoxylierungs- und/oder Propoxylierungsprodukt eines Alkohols, der einen aromatischen ringförmigen Substituenten trägt, 2 bis 10 Ethylenoxid- und/oder Propylenoxideinheiten enthält.

6. Entlackungsmittel nach einem oder mehreren der Ansprüche 2 bis 5, **dadurch gekennzeichnet, daß** es aus
a) 40 bis 80 Gew.-% Wasser,
b) 10 bis 40 Gew.-% organischer Alkohol,
c) 5 bis 25 Gew.-% Alkalitätsträger,
d) 1 bis 25 Gew.-% Ethoxylierungs- und/oder Propoxylierungsprodukt eines Alkohols, der einen aromatischen ringförmigen Substituenten trägt, mit 2 bis 15 Mol Ethylenoxid und/oder Propylenoxid und
e) 1 bis 15 Gew.% weitere Wirk- oder Hilffstoffe besteht,
wobei sich die Mengenanteile zu 100 Gew.-% addieren.

7. Wäßrige Anwendungslösung zum Entlacken von Bauteilen aus Metall, die dadurch erhältlich ist, daß man ein Entlackungsmittel nach einem oder mehreren der Ansprüche 1 bis 6 mit Wasser im Verhältnis Entlackungsmittel : Wasser = 1 : 9 bis 1 : 1, vorzugsweise 1 : 4 bis 1 : 2 verdünnt.

8. Verfahren zum Entlacken von Bauteilen aus Metall, **dadurch gekennzeichnet, daß** man die Bauteile mit einer Anwendungslösung nach Anspruch 7 in Berührung bringt, die eine Temperatur im Bereich von 20 bis 100 °C, vorzugsweise im Bereich von 50 bis 95 °C aufweist.

9. Verwendung von Ethoxylierungs- und/oder Propoxylierungsprodukten eines Alkohols, der einen aromatischen ringförmigen Substituenten trägt, mit 2 bis 15 Mol Ethylenoxid und/oder Propylenoxid, als Additiv in wässrigen alkalischen Entlackungsmitteln.
